(19) Europäisches Patentamt
European Patent Office
Office européen des brevets

(11) Veröffentlichungsnummer: **0 187 649**
**B1**

# (12) EUROPÄISCHE PATENTSCHRIFT

(45) Veröffentlichungstag der Patentschrift: **08.08.90**

(51) Int. Cl.5: **F02D 21/08,** F02D 41/24, F02D 41/14

(21) Anmeldenummer: **86100079.2**

(22) Anmeldetag: **04.01.86**

## (54) Gemischregelungsvorrichtung für einen Verbrennungsmotor.

(30) Priorität: **10.01.85 DE 3500608**
**18.09.85 DE 3533197**

(43) Veröffentlichungstag der Anmeldung:
**16.07.86 Patentblatt 86/29**

(45) Bekanntmachung des Hinweises auf die Patenterteilung:
**08.08.90 Patentblatt 90/32**

(84) Benannte Vertragsstaaten:
**AT BE CH DE FR GB IT LI NL SE**

(56) Entgegenhaltungen:
**GB-A-2 041 579**
**GB-A-2 098 360**
**US-A-4 376 026**
**US-A-4 445 483**
**US-A-4 546 747**

**PATENT ABSTRACTS OF JAPAN, Band 8, Nr. 160 (M-312)[1597], 25. Juli 1984; & JP-A-59 54 739 (TOYOTA JIDOSHA K.K.) 29-03-1984**
**Motronic, 1 Ausgabe 1983, R. Bosch GmbH, S. 8,9,21,35**

**Die Akte enthält technische Angaben, die nach dem Eingang der Anmeldung eingereicht wurden und die nicht in dieser Patentschrift enthalten sind.**

(73) Patentinhaber: **Atlas Fahrzeugtechnik GmbH, Eggenpfad 26, D-5980 Werdohl(DE)**

(72) Erfinder: **Brandner, Burkhard, Bornstrasse 2, D-5980 Werdohl(DE)**
Erfinder: **Stübs, Albert, Am Weiten Blick 35, D-5880 Lüdenscheid(DE)**
Erfinder: **Pawlik, Martin, Maibaumstrasse 29, D-5970 Plettenberg(DE)**
Erfinder: **Wenzlik, Klaus, In der Bräke 1, D-5860 Iserlohn(DE)**

(74) Vertreter: **Hassler, Werner, Dr., Postfach 17 04 Asenberg 62, D-5880 Lüdenscheid(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft eine Gemischregelungsvorrichtung für einen Verbrennungsmotor mit einer Lambdamagerastsonde und mit einer Vergleicherschaltung zur Bildung eines Führungssignals durch Vergleich des Lambdaistsignals mit einem von Betriebswerten abhängigen Lambdasollwert, wobei aufgrund dieses Führungssignals ein Stellsignal für die Kraftstoffzufuhr gebildet wird, sowie mit einem Abgasrückführventil, das mit betriebsparameterabhängigen Sollwerten angesteuert wird.

Bekannt ist für die Gemischregelung das sog. Magerkonzept, das mit einem Luftüberschuß arbeitet und zu einer Optimierung des Kraftstoffverbrauchs führt. Die $NO_x$-Werte werden in dieser Betriebsart bekanntlich herabgesetzt. Die HC-Werte können unter Umständen leicht ansteigen. Für einen solchen Betrieb im Magerbereich ist eine Lambdasonde im Abgaskanal erforderlich. Die Lambdasonde kann unmittelbar den Sauerstoffanteil im Abgas messen oder den Lambdawert in anderer Weise bestimmen.

Die DE-A 3 321 424 beschreibt eine Gemischregelung, bei der einerseits ein Lambdasollwert = 1 und andererseits ein Lambdasollwert im Magerbereich vorgebbar sind. Diese beiden Sollwerte werden in gesonderten Regelkreisen verarbeitet. Eine Umschaltung zwischen diesen beiden Sollwerten erfolgt parameterabhängig. Mit einem solchen Betrieb bei zwei Lambasollwerten läßt sich keine ausreichende Optimierung erzielen. Insbesondere ist im Magergebiet die Vorgabe nur eines Lambdasollwertes für alle Fahrzustände unzureichend, um Fahrfehler, insbesondere Laufunruhe oder Aussetzen des Verbrennungsmotors, auszuschließen.

Eingehende Untersuchungen haben darüberhinaus ergeben, daß durch Vorgabe eines Kraftstoffeinspritzwertes entsprechend dem gewünschten Lambdawert allein ein optimales Fahrverhalten nicht erzielbar ist, weil die Exemplarstreuungen der Verbrennungsmotoren zu groß sind. Eine Berücksichtigung der Exemplarstreuungen ist im Rahmen dieses Konzeptes nicht möglich.

Eine Gemischregelung ist aus der DE-A 3 248 745 bekannt. Dort werden Lambdagrundwerte entsprechend der gemessenen Laufunruhe korriegiert. Diese korrigierten Werte dienen als Sollwerte für eine Regelung. Die Korrekturen liefern nicht immer eindeutige Betriebswerte, so daß der Motor nicht immer optimal arbeitet.

In "Motronic", 1. Ausgabe 1093, R. Bosch GmbH, S. 8, 9, 21, 35 ist für eine Gemischregelungsvorrichtung der eingangs genannten Art ein Lambdakennfeld mit Eingangswerten für Druck und Drehzahl beschrieben. Die aus dem Kennfeld ausgelesenen Lambdasollwerte werden in eine Regelstrecke der Lambdasonde eingegeben. Eine Korrektur der Temperaturabhängigkeit und der sonstigen Abhängigkeit der Lambdaistwerte ist nicht vorgesehen.

Die US-A 4 376 026 beschreibt eine Lambdasonde, deren Ausgangsspannung in Abhängigkeit von einer Veränderlichen korrigiert wird.

Die Ausgangsspannung einer Lambdasonde weist für den stöchiometrischen Wert Lambda = 1 eine sprunghafte Änderung auf. Wenn der Verbrennungsmotor jedoch im Magerbereich arbeiten soll, muß man Lambdawerte zwischen 1 und 2 auswerten. Eine solche Magerastsonde ist in dem Kennwerteblatt A 258 ..2 063 der Robert Bosch GmbH vom 14. 10. 1982 beschrieben. Die absoluten Spannungswerte und die Spannungsänderungen in Abhängigkeit von Lambda sind nur noch sehr gering, so daß genaue Messungen erforderlich sind. Bekanntlich weist die Ausgangsspannung einer Lambdasonde eine Temperaturabhängigkeit auf. Bei Lambdawerten oberhalb 1 sind diese temperaturabhängigen Spannungsänderungen so groß, daß eine eindeutige Lambdabestimmung nicht mehr möglich ist. Somit ist eine Temperaturkompensation für einen stabilen und schadstoffarmen Motorbetrieb notwendig. Es hat sich gezeigt, daß auch der Innenwiderstand einer Lambdasonde eine Temperaturabhängigkeit aufweist.

Aufgabe der Erfindung ist die Bereitstellung einer Gemischregelungsvorrichtung mit einem temperaturkorrigierten Lambdasignal, die im gesamten Fahrbereich eines Verbrennungsmotors eine Verbrauchs- und/oder Emissionsoptimierung unter Berücksichtigung der Fahranforderungen ermöglicht.

Diese Aufgabe wird nach der Erfindung durch folgende Merkmale in Verbindung mit den Merkmalen nach Anspruch 1, erster Teil gelöst:

a) die Sondenspannung (Us) und eine durch Anlagen der Sondenspannung über einen Lastwiderstand gewonnene Lastspannung (U1) werden zur Bildung eines dem Sondeninnenwiderstand proportionalen Signals in einer Divisionsstufe (37) dividiert;

b) die Sondenspannung sowie die dem Sondeninnenwiderstand proportionale Spannung liegen als Adreßsignale an einem Korrekturkennfeldspeicher an, dessen Adreßplätze jeweils ein temperaturkorrigiertes Lambdaistsignal enthalten;

c) ein durch Betriebswerte des Verbrennungsmotors wie Drehzahl, Last, Temperatur und ähnliche anwählbarer Adreßspeicher (9) enthält die Lambdasollwerte in Form von Mehrbitlambdasollwerten in einem Kennfeld;

d) der Adreßspeicher (9) enthält außerdem die Sollwerte in Form von Mehrbitsollwerten für das Abgasrückführventil (12);

e) zur Bildung des Stellsignals wird das temperaturkorrigierte Lambdaistsignal mit dem Lambdasollsignal verglichen.

Die Erfindung unterscheidet sich insofern vom Stand der Technik, als die Lambdasollwerte im gesamten Betriebskennfeld des Verbrennungsmotors als Mehrbitwerte individuell vorgegeben werden. Die Festlegung dieser Lambdasollwerte berücksichtigt einerseits das Fahrverhalten des Verbrennungsmotors sowie die Leistungsanforderungen. Entsprechend den Lastwerten kann man einen Vollastbereich mit Lambdasollwerten nahe 1 und Teillastbereiche mit höheren Lamdasollwerten fahren. Die Lambdasollwerte können jeweils so festgelegt werden, daß Lauffehler oder Fahrfehler des Verbrennungsmotors ausgeschaltet sind. Da die Kraftstoffzufuhr unter Berücksichtigung der Lambdasollwerte geregelt wird, ist die Gemischregelung von Exemplarstreuungen der einzelnen Verbrennungsmotoren einer Serie unabhängig. Außerdem werden Mehrbitsollwerte für das Abgasrückführventil bereitgestellt. Das Korrekturkennfeld ermöglicht einen sorgfältigen Abgleich der Istwerte als Eingangswerte, so daß eine genaue und stabile Regelung möglich ist. Dadurch wird die Sondenspannung zur Bildung zweier Signalwerte benutzt, nämlich einmal für die Sondenspannung selbst und zum anderen für ein Spannungssignal proportional dem Sondeninnenwiderstand. Da diese beiden Größen über ein temperaturabhängiges Kennfeld zusammenhängen, ist eine Temperaturkompensation der Sondenspannung oder der Spannung für den Sondeninnenwiderstand möglich, so daß man daraus ein temperaturkorrigiertes Lambdaistsignal gewinnen kann. Eine Temperaturmessung über einen zusätzlichen Temperatursensor ist nicht erforderlich.

Zur Vermeidung der Überschreitung von Grenzwerten beim Betrieb des Verbrennungsmotors ist ferner vorgesehen, daß der Adreßspeicher auch Eckwerte für die Einstellung der Kraftstoffzufuhr enthält.

Zur Verringerung der $NO_X$-Werte ist ferner vorgesehen, daß für den Sollwert des Abgasrückführventils und das Istsignal eines Stellungsmelders eine Vergleicherschaltung vorgesehen ist, die auf einer Leitung ein Stellsignal für einen Stellantrieb abgibt.

Insgesamt erzielt man mit der Gemischregelung nach der Erfindung eine drastische Reduzierung der CO- und $NO_X$-Anteile. Wenn die HC-Werte im Luftüberschußgebiet die zulässigen Grenzwerte übersteigen sollten, kann man einen Oxidationskatalysator nachschalten.

Die Ausgangsspannung der Sonde wird im Multiplexbetrieb derart ausgewertet, daß eine periodisch wirksame Umschaltstufe die Sondenspannung (Us) einmal direkt zu einer Haltestufe und im Umschaltzustand einerseits an einen Lastwiderstand anlegt und andererseits zu einer Haltestufe für die Lastspannung durchläßt. Die Sondenspannung wird so einmal direkt festgehalten. Zum anderen wird eine Lastspannung gebildet, die eine Funktion des Innenwiderstandes ist.

Eine Korrektur mit diskreten Einzelwerten ist dadurch möglich, daß das Korrekturkennfeld als Kennfeldspeicher ausgebildet ist, dessen Adreßplätze in Abhängigkeit von der Sondenspannung und der Spannung für den Sondeninnenwiderstand abgefragt werden.

Eine Ausführungsform der Erfindung wird im Folgenden unter Bezugnahme auf die anliegenden Zeichnungen erläutert, in denen darstellen:

Fig. 1 ein Blockschaltbild der gesamten Gemischregelung,

Fig. 2 ein Kennfeld des Sondeninnenwiderstandes in Abhängigkeit von der Temperatur mit Lambda als Parameter und

Fig. 3 ein Blockschaltbild für die Gemischregelung nach der Erfindung.

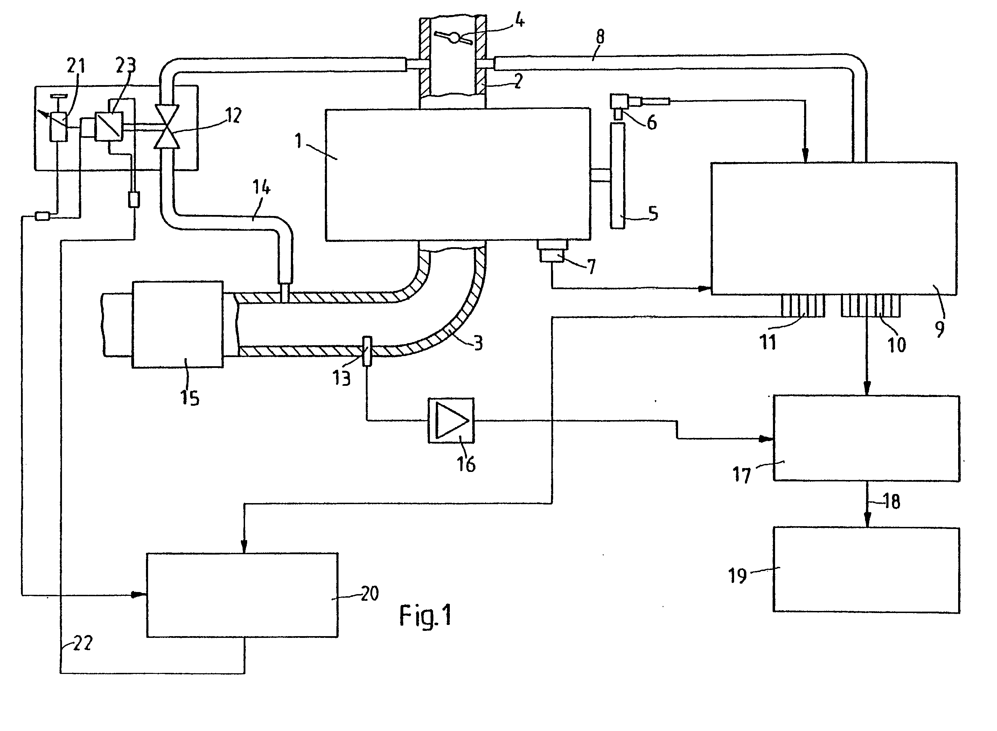

Fig. 1 zeigt einen Verbrennungsmotor 1 mit einem Ansaugkanal 2 und einem Abgaskanal 3. Der Ansaugkanal 2 ist durch eine Drosselklappe 4 gesteuert. Die Kraftstoffzufuhr ist im einzelnen nicht dargestellt. Man kann einen steuerbaren Vergaser oder eine Kraftstoffeinspritzung vorsehen. Mit der Kurbelwelle des Verbrennungsmotors ist eine Scheibe 5, z.B. die Schwungscheibe, mit Markierungen gekoppelt, die von einem Sensor, normalerweise einem Zahnkranzsensor 6, abgefühlt werden. Dieser Zahnkranzsensor 6 ermöglicht also die Erfassung der Drehzahl des Verbrennungsmotors. Ein weiterer Sensor 7 dient zur Erfassung der Temperatur des Verbrennungsmotors über das Kühlwasser oder über die Ansaugluft. Schließlich ist ein Lastsensor 8 vorgesehen, der über den Saugrohrdruck die Last des Motors erfaßt.

Die Werte der beschriebenen Sensoren 6, 7 und 8 liegen als Adreßeingänge an einem Adreßspeicher oder Kennfeldspeicher 9 an. Innerhalb dieses Adreßspeichers sind die Adreßplätze nach Kennlinien organisiert, die nach Betriebsparametern, wie dem Lastzustand und/oder dem Temperaturzustand des Verbrennungsmotors 1 geordnet sind. Die Speicherplätze des Adreßspeichers 9 enthalten in den einzelnen Bitstellungen einen 8-Bit-Lambdasollwert 10 und einen 6-Bit-Sollwert 11 für ein Abgasrückführventil 12. Die Bitzahl der jeweiligen Sollwerte hängt von der Organisation und Kapazität des Adreßspeichers 9 ab.

Im Abgaskanal 3 befindet sich eine Lambdasonde 13 zur Messung des Sauerstoffanteils in den Abgasen. Die Lambdasonde mißt kontinuierlich die Lambdawerte zwischen 0,9 und 1,9, wobei 1,0 bekanntlich dem stöchiometrischen Sauerstoffanteil entspricht. An den Abgaskanal 3 ist eine Rückführleitung 14 angeschlossen, die über das bereits genannte Abgasrückführventil 12 gesteuert wird und durch die Abgas in den Ansaugkanal zurückgeführt wird. Der Abgaskanal 3 kann wahlweise in einen Oxidationskatalysator 15 münden.

Die Signale der Lambdasonde 13 werden in einem Verstärker 16 vertärkt. Das Ausgangssignal des Verstärkers 16 liegt zusammen mit dem 8-Bit-Lambdawert 10 an einer Vergleicherschaltung 17 an. Die Vergleicherschaltung 17 gibt entsprechend dem Ergebnis des Vergleichs einen Stellwert 18 an eine Steuerschaltung 19 für die Vergasereinstellung oder die Kraftstoffzumessung bei einer Einspritzanlage ab.

Der Sollwert 11 für das Rückführverhältnis liegt an einer Vergleicherschaltung 20 an. Mit dem Abgasrückführventil ist ein Stellungsmelder 21 gekoppelt, der ein Istsignal über die Stellung des Abgasrückführventils 12 an die Vergleicherschaltung 20 liefert. Die Vergleicherschaltung 20 gibt auf einer Leitung 22 ein Stellsignal an den Stellantrieb 23 des Abgasrückführventils 12 ab. Anstelle eines Stellungsmelders kann man auch einen Durchflußmesser in die Rückführleitung einbauen, deren Signal entsprechend ausgewertet wird.

Der Adreßspeicher 9 enthält ein Betriebskennfeld für den gesamten Betriebsbereich des Verbrennungsmotors. Für jeden Betriebswert wird ein 8-Bit-Lambdasollwert gespeichert, damit ein ordnungsgemäßer Betrieb, d.h. ohne Lauffehler des Verbrennungsmotors, im Luftüberschußgebiet gewährleistet ist. Dadurch wird die Emission von CO- und $NO_x$-Schadstoffen herabgesetzt. Die Kraftstoffzumessung für den Verbrennungsmotor erfolgt über einen Regelkreis, da eine einfache Vorgabe von Einspritzwerten zur Erzielung eines Lambdasollwertes infolge von Exemplarstreuungen verschiedener Verbrennungsmotoren nicht ausreichen würde. Mit Hilfe dieses Regelkreises über die Vergleicherschaltung 17 und die Steuerschaltung 19 ist ein sicherer Betrieb des Verbrennungsmotors im Magerbereich bei Verringerung der Schadstoffemission und unter gleichzeitiger Verbrauchsoptimierung möglich. Ein nicht vermeidbarer Anstieg der HC-Werte in diesem Betriebsbereich kann durch den Oxidationskatalysator 15 herabgesetzt werden, dessen Betrieb gegenüber einem sonst notwendigen Dreiwegekatalysator wesentlich wirtschaftlicher ist.

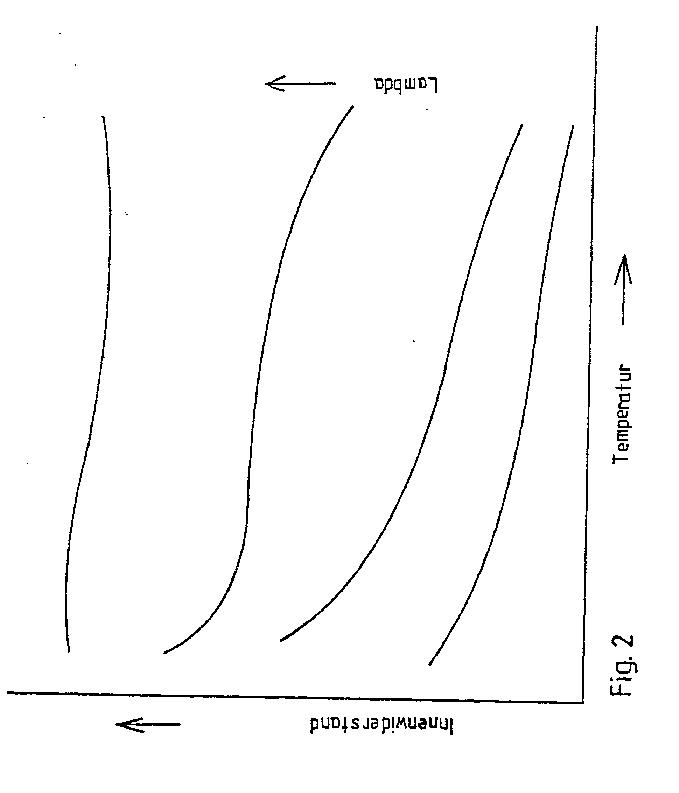

Fig. 2 zeigt den Verlauf des Sondeninnenwiderstandes in Abhängigkeit von der Temperatur. Die vier dargestellten Kurven gelten für vier Lambdawerte als Parameter. Diese vier Lambdawerte sind jeweils größer als 1 und nehmen bei übereinanderliegenden Kurven zu. Man erkennt deutlich, daß der Innenwiderstand mit zunehmender Temperatur absinkt. Bei höheren Lambdawerten kommen offenbar noch weitere Einflüsse ins Spiel, die die Änderungsrichtung umkehren können. Man erkennt aus den Kurven, daß die Änderung des Innenwiderstandes in Abhängigkeit von dem Arbeitsbereich der Temperatur recht groß ist. Aufgrund eines solchen Temperaturkennfeldes ist es jedoch möglich, die jeweilige Sondenspannung in Abhängigkeit vom Innenwiderstand zu korrigieren, so daß man ein temperaturkorrigiertes Lambdasignal aus der Sondenspannung ableiten kann.

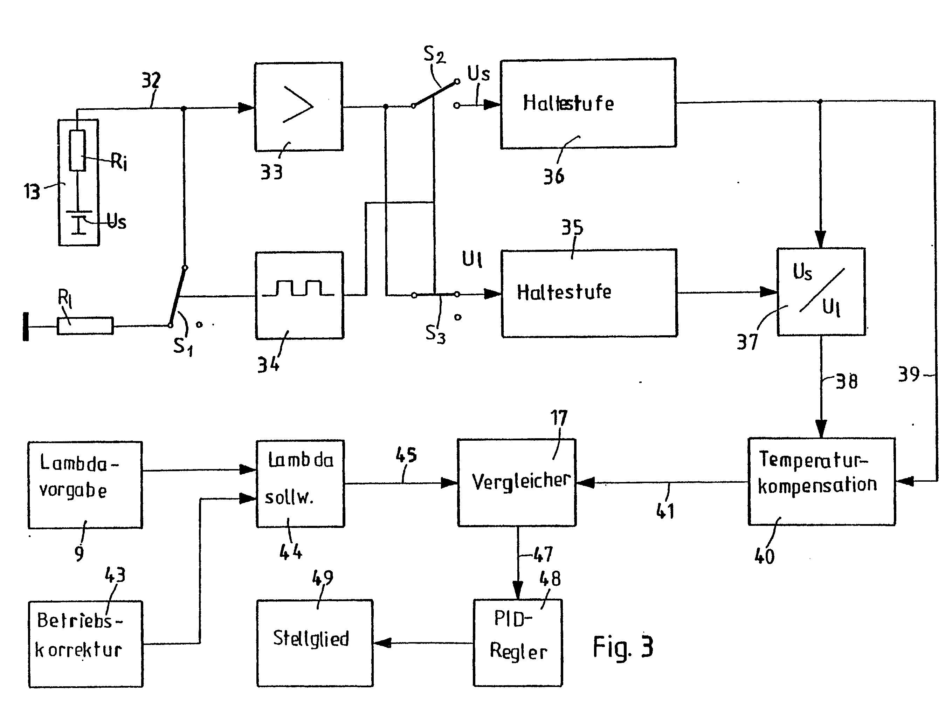

Eine hierzu geeignete Schaltung ist in Fig. 3 dargestellt. Man erkennt in Fig. 3 eine Lambdasonde 13, die als Ersatzschaltbild dargestellt ist und eine Spannungsquelle zur Abgabe einer Sondenspannung Us sowie einen Innenwiderstand Ri enthält. Die Sondenspannung Us wird auf einer Leitung 32 abgenommen und in einem Verstärker 33 verstärkt. Eine Umschaltstufe 34 ist als Oszillator zur Erzeugung von Rechtecksignalen ausgebildet, die zur Schaltung bzw. Tastung der Schalter S1, S2 und S3 dienen. Der Schalter S1 schaltet einerseits eine Verbindung zwischen der Leitung 32 und einem Lastwiderstand R1. In der anderen Schalterstellung ist die Leitung 32 unbelastet. Die Schalter S2 und S3 werden im Gegentakt betrieben und erlauben einen Multiplexbetrieb. Wenn der Schalter S1 die Leitung 32 mit dem Lastwiderstand R1 verbindet, so ist gleichzeitig jeweils der Schalter S3 geschlossen, so daß über den Schalter S3 die durch den Lastwiderstand R1 belastete Sondenspannung U1 in gleicher Höhe an der Haltestufe 35 anliegt. Der Haltestufe 35 ist ein Impedanzwandler vorgeschaltet.

In der entgegengesetzten Schalterstellung des Schalters S1, wenn die Sondenspannung unbelastet ist, ist der Schalter S2 geschlossen, so daß die unbelastete Sondenspannung Us an der Haltestufe 36 anliegt, der ebenfalls ein Impedanzwandler vorgeschaltet ist. Die Ausgangsspannungen der Haltestufen 35 und 36 werden in einer Divisionsstufe 37 dividiert, so daß man auf der Leitung 38 ein unkorrigiertes Signal für den Innenwiderstand erhält.

Für den Innenwiderstand Ri der Sonde gilt bekanntlich die nachstehende Formel

$$Ri = \frac{Us - U1}{U1/R1}$$

hieraus erhält man durch Umformung

$$\frac{Us}{U1} = \frac{Ri + R1}{R1}$$

Da R1 eine konstante Größe ist, erhält man durch Division in der Divisionstufe 37 einen Wert der im wesentlichen dem Innenwiderstand Ri der Sonde proportional ist.

Die Leitung 38 und die Leitung 39, die die Sondenspannung als Maß für das Lambdaistsignal führt, liegen an einer Kompensationsschaltung 40 an. In dieser Schaltung erfolgt eine Temperaturkompensation über ein Kennfeld nach Fig. 1, so daß auf der Leitung 41 ein temperaturkorrigiertes Lambdaistsignal bereitsteht.

Die Kompensationsschaltung 40 kann ein Kennfeldspeicher sein, dessen Adreßplätze durch die Werte für den unkorrigierten Sondeninnenwiderstand und die Sondenspannung anwählbar sind. Man kann die Korrektur so vornehmen, daß der Wert für den Sondeninnenwiderstand über die Sondenspannung korrigiert wird oder umgekehrt. Dieses hängt von praktischen Gesichtspunkten ab.

Der Adreßspeicher 9 erzeugt eine Lambdavorgabe bei Betriebszuständen des Verbrennungsmotors, für die ein Magerbetrieb zu realisieren ist. Die Stufe 43 enthält Baugruppen, die den Betriebszustand des Verbrennungsmotors überwachen und entsprechende Korrektursignale zur Verfügung stellen, wenn ein Magerbetrieb nicht gewährleistet werden kann, insbesondere im Leerlauf, bei Beschleunigung und bei Vollast. Aus den Ausgangssignalen der Stufen 9 und 43 wird in der Stufe 44 ein Lambdasollwert gebildet. Dieser Lambdasollwert liegt über eine Leitung 45 zusammen mit dem Lambdaistsignal auf der Leitung 41 an einem Vergleicher 17 an, der auf der Leitung 47 ein Korrektursignal für einen PID-Regler 48 abgibt. Der PID-Regler 48 gibt ein Stellsignal für ein Stellglied 49 ab, das die Gemischzusammensetzung des Verbrennungsmotors verstellt. Eine Beeinflussung ist z.B. über die Verstellung der Droselklappe, über eine Abgasrückführung, über eine Verstellung der Kraftstoffzufuhr oder in anderer Weise möglich.

## Patentansprüche

1. Gemischregelungsvorrichtung für einen Verbrennungsmotor (1) mit einer Lambdamagerastsonde und mit einer Vergleicherschaltung (17) zur Bildung eines Führungssignals durch Vergleich des Lambdaistsignals mit einem von Betriebswerten abhängigen Lambdasollwert, wobei aufgrund dieses Führungssignals ein Stellsignal für die Kraftstoffzufuhr gebildet wird, sowie mit einem Abgasrückführventil, das mit betriebsparameterabhängigen Sollwerten angesteuert wird, gekennzeichnet durch folgende Merkmale:

a) die Sondenspannung (Us) und eine durch Anlagen der Sondenspannung über einen Lastwiderstand gewonnene Lastspannung (U1) werden zur Bildung eines dem Sondeninnenwiderstand proportionalen Signals in einer Divisionsstufe (37) dividiert;

b) die Sondenspannung sowie die dem Sondeninnenwiderstand proportionale Spannung liegen als Adreßsignale an einem Korrekturkennfeldspeicher an, dessen Adreßplätze jeweils ein temperaturkorrigiertes Lambdaistsignal enthalten;

c) ein durch Betriebswerte des Verbrennungsmotors wie Drehzahl, Last, Temperatur und ähnliche anwählbarer Adreßspeicher (9) enthält die Lambdasollwerte in Form von Mehrbitlambdasollwerten in einem Kennfeld;

d) der Adreßspeicher (9) enthält außerdem die Sollwerte in Form von Mehrbitsollwerten für das Abgasrückführventil (12);

e) zur Bildung des Stellsignals wird das temperaturkorrigierte Lambdaistsignal mit dem Lambdasollsignal verglichen.

2. Gemischregelungsvorrichtung nach Anspruch 1, dadurch gekennzeichnet, daß der Adreßspeicher (9) auch Eckwerte für die Einstellung der Kraftstoffzufuhr enthält.

3. Gemischregelungsvorrichtung nach Anspruch 1 oder 2, dadurch gekennzeichnet, daß für den Sollwert des Abgasrückführventils (12) und das Istsignal eines Stellungsmelders (21) oder eines Durchflußmessers eine Vergleicherschaltung (20) vorgesehen ist, die auf der Leitung (22) ein Stellsignal für einen Stellantrieb (23) abgibt.

4. Gemischregelungsvorrichtung nach einem der Ansprüche 1 bis 3, dadurch gekennzeichnet, daß eine periodisch wirksame Umschaltstufe (34) die Sondenspannung (Us) einmal direkt zu einer Haltestufe (36) und im Umschaltzustand einerseits an einen Lastwiderstand (38) anlegt und andererseits zu einer Haltestufe (35) für die Lastspannung durchläßt.

5. Gemischregelungsvorrichtung nach Anspruch 4, dadurch gekennzeichnet, daß jeder Haltestufe (35, 36) ein Impedanzwandler vorgeschaltet ist.

## Claims

1. Mixture regulator for an internal combustion engine (1) with a lambda lean burn branch probe and with a comparison circuit (17) to form a guide signal through a comparison of the lambda actual signal with a lambda ideal value which is dependent on the operating parameters, wherein as a result of this guide signal a setting signal is formed for the fuel supply, as well as with an exhaust gas return valve which is controlled with ideal values which are dependent on operating parameters, characterised by the following features:

a) the probe voltage (Us) and a load voltage (U1) obtained through the probe voltage by a load resistance are divided in a division stage (37) to form a signal which is proportional to the probe inner resistance;

b) the probe voltage as well as the voltage which is proportional to the probe inner resistance adjoin as address signals a correction characteristic field memory whose address places each contain a temperature corrected lambda actual signal;

c) an address memory (9) selectable through operating parameters of the internal combustion engine, such as speed, load, temperature and the like, contains the lambda ideal values in the form of multi-bit lambda ideal values in a characteristic field;

d) the address memory (9) further contains the ideal values in the form of multi-bit ideal values for the exhaust gas return valve (12);

e) the temperature-corrected lambda actual signal is compared with the lambda ideal signal to form the setting signal.

2. Mixture regulator according to claim 1 characterised in that the address memory (9) also contains corner values for setting the fuel supply.

3. Mixture regulator according to claim 1 or 2 characterised in that a comparison circuit (20) is provided for the ideal value of the exhaust gas return valve (12) and the actual signal of a position recorder (21) or of a flow meter wherein the comparison circuit sends on the lead (22) a setting signal for a servo drive (23).

4. Mixture regulator according to one of claims 1 to 3 characterised in that a periodically active change-over stage (34) places the probe voltage (Us) first of all directly to a holding stage (36) and in the changeover state on one side to a load resistance and on the other lets it through to a holding stage (35) for the load voltage.

5. Mixture regulator according to claim 4 characterised in that an impedance transformer is connected to the front of each holding stage (35, 36).

## Revendications

1. Dispositif de réglage du mélange pour un moteur thermique (1), comprenant une sonde lambda pour mélange pauvre et un circuit comparateur (17) pour la formation d'un signal d'asservissement par comparaison du signal de la valeur réelle de lambda avec une valeur de consigne pour lambda dépendant de grandeurs relatives au fonctionnement, avec formation, sur la base de ce signal d'asservissement, d'un signal de réglage pour l'alimentation en carburant, ainsi qu'une soupape de recyclage des gaz d'échappement, qui est pilotée par des valeurs de consigne dépendantes de paramètres de fonctionnement, caractérisé en ce que:

a) la tension de la sonde (Us) et une tension de charge (U1), obtenue aux bornes d'une résistance de charge par application de la tension de la sonde à cette résistance, sont divisées dans un étage de division (37) pour l'élaboration d'un signal proportionnel à la résistance interne de la sonde;

b) la tension de la sonde et la tension proportionnelle à la résistance interne de la sonde sont appliquées en tant que signaux d'adresses à une mémoire à réseau de caractéristiques de correction, mémoire dont les emplacements d'adresses contiennent chacun un signal de la valeur réelle de lambda corrigé en température;
c) une mémoire d'adresses (9), pouvant être attaquée par des grandeurs relatives au fonctionnement du moteur thermique, telles que la vitesse de rotation, la charge, la température et analogues, contient les valeurs de consigne pour lambda sous la forme de valeurs de consigne pour lambda à plusieurs bits dans un réseau de caractéristiques;
d) la mémoire d'adresses (9) contient en outre les valeurs de consigne pour la soupape (12) de recyclage de gaz d'échappement sous la forme de valeurs de consigne à plusieurs bits; et
e) pour l'élaboration du signal de réglage, le signal de la valeur réelle de lambda, corrigé en température, est comparé avec le signal de la valeur de consigne pour lambda.

2. Dispositif de réglage du mélange selon la revendication 1, caractérisé en ce que la mémoire d'adresses (9) contient également des valeurs de coupure pour le réglage de l'alimentation en carburant.

3. Dispositif de réglage du mélange selon la revendication 1 ou 2, caractérisé en ce qu'il comprend un circuit comparateur (20) pour la valeur de consigne de la soupape (12) de recyclage de gaz d'échappement et le signal de valeur réelle d'un transmetteur de position (21) ou d'un débitmètre, circuit comparateur (20) qui délivre un signal de réglage pour une servocommande (23) sur une ligne (22).

4. Dispositif de réglage du mélange selon une des revendications 1 à 3, caractérisé en ce qu'il comprend un étage de commutation (34), à action périodique, qui applique dans un état la tension de la sonde (Us) directement à un étage de maintien (36), tandis que, à l'état commuté, il applique cette tension d'une part à une résistance de charge (38) et la laisse passer d'autre part à un étage de maintien (35) pour la tension de charge.

5. Dispositif de réglage du mélange selon la revendication 4, caractérisé en ce que chaque étage de maintien (35, 36) est précédé d'un transformateur d'impédance.

1
2
3
4
5
6
7
8
9
10
11
12
13
14
15
16
17
18
19
20
21
22
23

Fig.1

Lambda
Temperatur
Innenwiderstand

Fig. 2

32
Ri
13
Us
Rl
S1
33
34
S2
Us
S3
Ul
Haltestufe
36
35
Haltestufe
Us
Ul
37
38
39
Lambda-
vorgabe
9
Lambda
sollw.
44
45
Vergleicher
17
41
Temperatur-
kompensation
40
43
Betriebs-
korrektur
49
Stellglied
47
48
PID-
Regler

Fig. 3